# EUROPEAN PATENT APPLICATION

(11) **EP 2 341 553 A2**
(43) Date of publication of application: **06.07.2011**
(21) Application number: 10165109.9
(22) Date of filing: 07.06.2010
(51) Int. Cl.: H01L 31/048

(54) **Solar tile structure and combination thereof**

(30) Priority: 30.12.2009 TW 098145969
(71) Applicant: Axuntek Solar Energy, Pingtung County 900 (TW)
(72) Inventor: Lee, Shih-Wei, Kaohsiung County 843 (TW); Liang, Tien-Hsing, Taipei City 111 (TW); Hou, Chi-Hung, Taipei City 100 (TW); Chiu, Chen-Hai, Hsinchu County 308 (TW); Tseng, Chiu-An, Kaohsiung County, 826 (TW)
(74) Representative: Becker Kurig Straus

(57) **Abstract**

A solar tile structure (20) includes a solar panel (22) and a base (24). The solar panel (22) is supported on an upper surface of the base (24). A protruding portion (261) is formed on a lateral surface of a first short side (26) of the base (24), a sunken portion (281) is formed on a lateral surface of a second short side (28) of the base (24), and the protruding portion (261) of the first short side (26) can be engaged with the sunken portion (281) of the second short side (28) tightly. The second short side (28) of the base (24) and a lateral side of the protruding portion (261) substantially align with two lateral sides of the solar panel (22).

## Description

The present invention relates to a solar tile structure and a solar tile structure combination according to the pre-characterizing clauses of claims 1 and 8.

With an issue of environmental consciousness, a solar panel and a traditional tile are combined to form a conventional solar tile module. The conventional solar tile module not only has functions of wind-proofing and water-proofing, but also can transform solar energy into electrical energy as an environmental-friendly building. However, the conventional solar tile module looks like a block array resulting in a low utilization ratio and inaesthetic appearance of the solar panel. Thus, design of a supporting structure for supporting the solar panels with a high utilization ratio and preferred aesthetic appearance of the solar panels is an important issue in the building material industry.

This in mind, the present invention aims at providing a solar tile structure without rims on short sides and a combination thereof that achieve a high utilization ratio and preferred aesthetic appearance of the solar panels.

This is achieved by providing a solar tile structure and a combination thereof according to claims 1 and 8. The dependent claims pertain to corresponding further developments and improvements.

As will be seen more clearly from the detailed description following below, the claimed solar tile structure includes a solar panel and a base. An upper surface of the base is for supporting the solar panel, a protruding portion is formed on a lateral surface of a first short side of the base, a sunken portion is formed on a lateral surface of a second short side of the base, and the protruding portion and the sunken portion are structural portions capable of wedging with each other tightly. The second short side of the base and a lateral side of the protruding portion substantially align with two lateral sides of the solar panel.

In the following, the invention is further illustrated by way of example, taking reference to the accompanying drawings. Thereof
FIG.1 is a diagram of a solar panel combination in the prior art,
FIG.2 is a diagram of a first solar tile structure according a preferred embodiment of the present invention,
FIG.3 is an exploded diagram of a solar tile structure combination according the preferred embodiment of the present invention,
FIG.4 is an assembly diagram of the solar tile structure combination according the preferred embodiment of the present invention,
FIG.5 is a front view of the solar tile structure combination according to the preferred embodiment of the present invention, and
FIG.6 is a lateral view of the solar tile structure combination according to the preferred embodiment of the present invention.

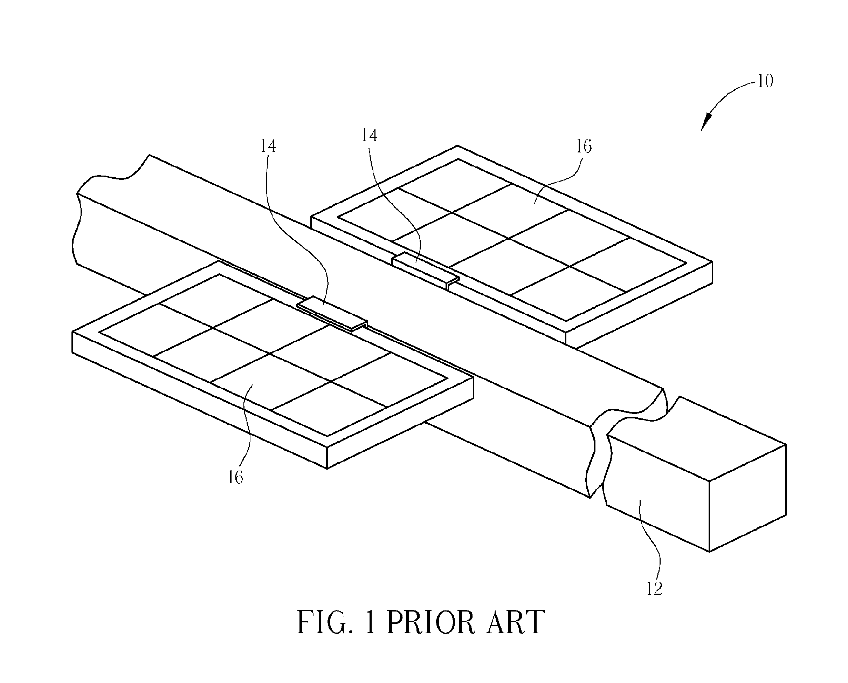

Please refer to FiG.1. FiG.1 is a diagram of a solar panel combination 10 in the prior art. The conventional solar panel combination 10 includes a supporter 12, at least one bridging component 14, and at least one solar panel 16 disposed on the supporter 12. As shown in FiG.1, the two bridging components 14 are disposed on two lateral sides of the supporter 12, so that the two solar panels 1 6 can be respectively fixed on the supporter 1 2 by the bridging components 14 for forming the solar panel combination 10 with a large size. Generally, the supporter 12 is utilized to be a basic framework of the solar panel combination 10, and the bridging components 14 are installed on predetermined positions of the supporter 12, so that the solar panels 16 can be combined together for forming the solar panel combination 10 according to mechanical design of the supporter 12. Due to different materials and different colors of the supporter 12, the bridging component 14, and the solar panel 16, the solar panel combination 10 shows latticed patterns of the supporter 12 between the adjacent solar panels 16 when the plurality of solar panels 16 is installed on the supporter 12. Therefore, the conventional solar panel combination 10 looks like a block array resulting in a low utilization ratio and inaesthetic appearance of the solar panel 16.

To provide a better understanding of the presented invention, a preferred embodiment will be explained in details. The preferred embodiment of the present invention is illustrated in the accompanying drawings with numbered elements, but application of the present invention is not limited to the preferred embodiment.

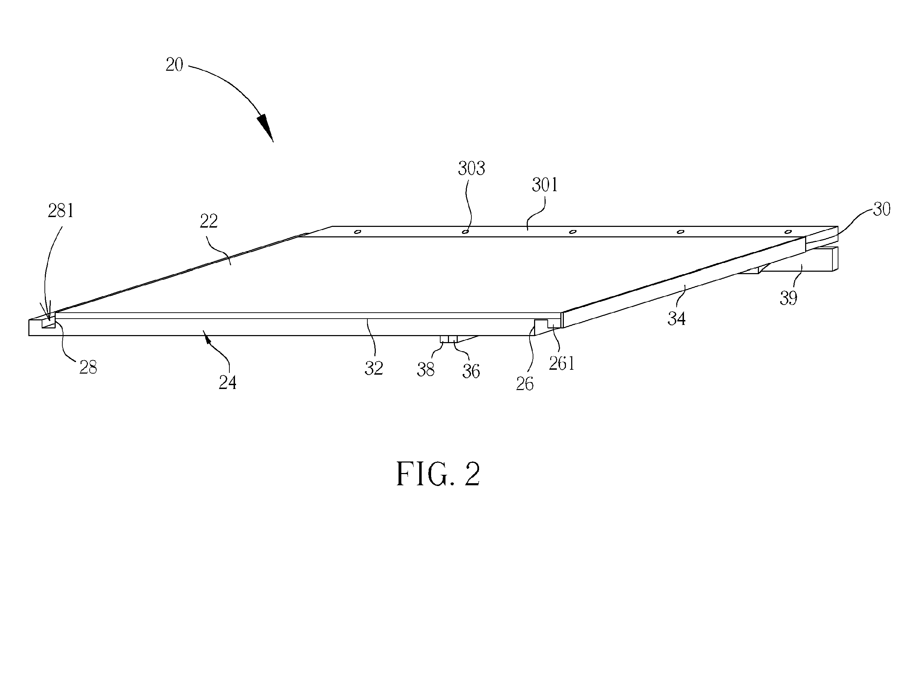

Please refer to FIG.2. FIG.2 is a diagram of a first solar tile structure 20 according a preferred embodiment of the present invention. The first solar tile structure 20 includes a first solar panel 22 and a first base 24. The first solar panel 22 is disposed on an upper surface of the first base 24 by gluing, lucking, or wedging methods, and so on. A first protruding portion 261 is formed on a lateral surface of a first short side 26 of the first base 24, and a first sunken portion 281 is formed on a lateral surface of a second short side 28 of the first base 24. The first protruding portion 261 can be a resilient hook, and the first sunken portion 281 can be a slot corresponding to the first protruding portion 261 , so that the first protruding portion 261 on the first short side 26 and the first sunken portion 281 on the second short side 28 are capable of wedging with each other tightly, and the first solar tile structure 20 can be connected to the other solar tile structure in X direction for forming a solar panel combination with a large size. A lateral side of the first protruding portion 261 and the second short side 28 of the first base 24 respectively align with two lateral edges of the first solar panel 22, substantially, so that the first solar tile structure 20 does not have rims formed on the short sides. Besides, a rim 301 can be disposed on a first long side 30 (or a second long side 32) of the first base 24 for connecting to the other solar tile structure in Y direction substantially perpendicular to X direction. A plurality of fixing portions 303 can be disposed on the rim 301 for fixing the first base 24 on the other solar tile structure. For example, the fixing portions 303 can lock the first base 24 on the other solar tile structure.

The first solar tile structure 20 can further include a plurality of buffers 34 disposed on the lateral surfaces of the first short side 26 and the second short side 28 of the first base 24, respectively. The buffers 34 can be made of water-proofing material, which not only can prevent the first solar tile structure 20 from impacting by external force but also can prevent liquid from leaking into a gap between the first solar tile structure 20 and the other solar tile structure. The lateral surfaces of the first long side 30 and the second long side 32 can be horizontal surfaces so as to align the lateral edge of the first base 24 with the lateral edge of the first solar panel 22. In addition, the first short side 26 of the first base 24 can be parallel to the second short side 28 substantially, and the first long side 30 of the first base 24 can be parallel to the second long side 32 substantially, so that the first solar tile structure 20 can be a quadrilateral structure for connecting to other structures as an array. Shape of the first solar tile structure 20 is not limited to the above-mentioned embodiment and depends on actual demand. Furthermore, the first solar tile structure 20 can further include a transmission cable (not shown in figures), a junction box 36 disposed on a bottom surface of the first base 24, and a battery module 38 electrically connected to the junction box 36. The transmission cable can pass through the first base 24, and two ends of the transmission cable are electrically connected to the first solar panel 22 and the junction box 36, so as to transmit electricity transformed by the first solar panel 22 to the junction box 36, and then the battery module 38 can store the electricity received by the junction box 36. The first solar tile structure 20 can further include a fixing component 39 disposed on the bottom surface of the first base 24. When the first solar tile structure 20 is laid on a housetop of a building, the fixing component 39 can be wedged with a fixing point of the housetop for installing the first solar tile structure 20 on the housetop of the building stably.

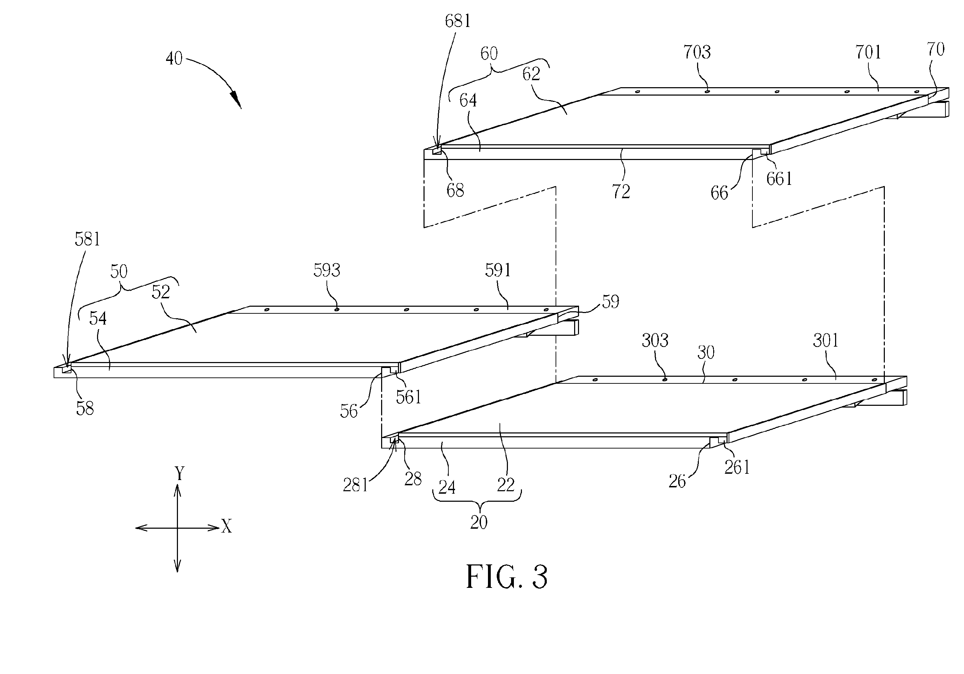

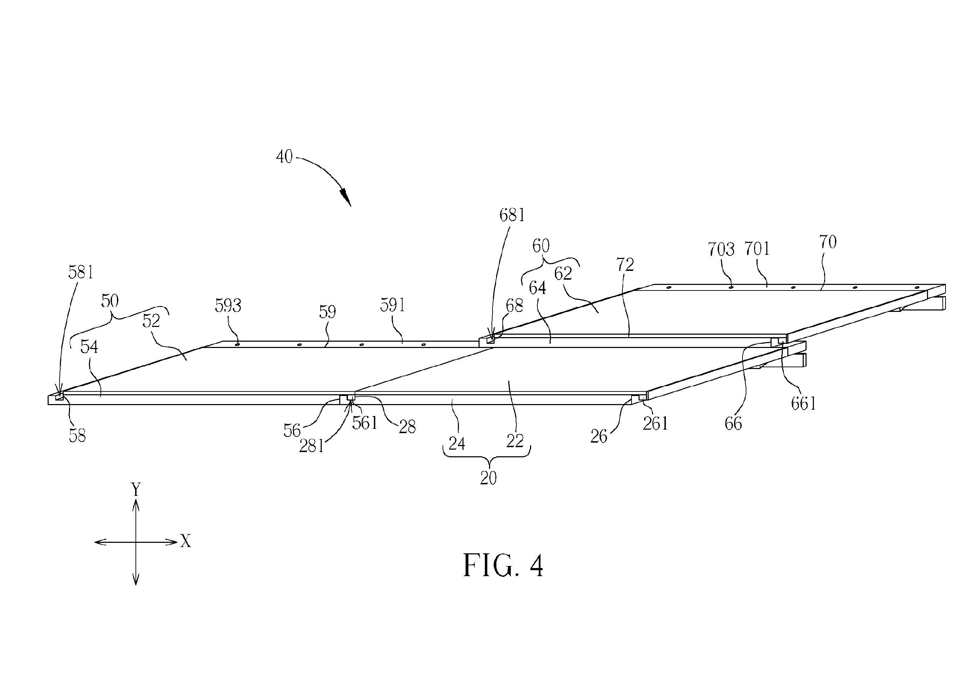

Please refer to FIG.3 and FIG.4. FIG.3 is an exploded diagram of a solar tile structure combination 40 according the preferred embodiment of the present invention. FIG.4 is an assembly diagram of the solar tile structure combination 40 according the preferred embodiment of the present invention. The solar tile structure combination 40 includes the first solar tile structure 20, a second solar tile structure 50, and a third solar tile structure 60. The second solar tile structure 50 and the third solar tile structure 60 have the same structural design and the same function as the first solar tile structure 20. As shown in FIG.3, the second solar tile structure 50 includes a second solar panel 52 and a second base 54. The second solar panel 52 is disposed on an upper surface of the second base 54. A second protruding portion 561 is formed on a lateral surface of a third short side 56 of the second base 54, a second sunken portion 581 is formed on a lateral surface of a fourth short side 58 of the second base 54, and the second protruding portion 561 of the third short side 56 and the second sunken portion 581 of the fourth short side 58 are capable of wedging with each other tightly. The third short side 581 of the second base 54 and a lateral edge of the second protruding portion 561 respectively align with two edges of the second solar panel 52, substantially, so that the second solar tile structure 50 does not have rims formed on the short sides. The first solar tile structure 20 can be connected to the second solar tile structure 50 in X direction tightly by wedging the first sunken portion 281 of the first base 24 with the corresponding second protruding portion 561 of the second base 24, or by wedging the first protruding portion 261 of the first base 24 with the corresponding second sunken portion 581 of the second base 54. Besides, a rim 591 can be formed on a third long side 59 of the second base 54 for connecting to the other solar tile structure in Y direction. A plurality of fixing portions 593 can be disposed on the rim 591 for fixing the second base 54 on the other solar tile structure tightly. For example, the fixing portions 593 can lock the second base 54 on the other solar tile structure.

As shown in FIG.3 and FIG.4, the third solar tile structure 60 includes a third solar panel 62 and a third base 64. The third solar panel 62 is disposed on an upper surface of the third base 64. A third protruding portion 661 is formed on a lateral surface of a fifth short side 66 of the third base 64, a third sunken portion 681 is formed on a lateral surface of a sixth short side 68 of the third base 64, and the sixth short side 68 of the third base 64 and a lateral edge of the third protruding portion 661 respectively align with two edges of the third solar panel 62, substantially, so that the third solar tile structure 60 does not have rims on the short sides and can be connected to the other solar tile structure in X direction. Besides, a rim 701 can be formed on a fifth long side 70 of the third base 64 for connecting to the other solar tile structure in Y direction. A plurality of fixing portions 703 can be disposed on the rim 701 for fixing the third base 64 on the other solar tile structure tightly. For example, the fixing portions 703 can lock the third base 64 on the other solar tile structure. Thus, when the first solar tile structure 20 is connected to the third solar tile structure 60 via the rim 301 in Y direction, as shown in FIG.4, the third base 64 of the third solar tile structure 60 overlaps the rim 301 of the first solar tile structure 20, the plurality of fixing portions 303 of the rim 301 can tightly engage with corresponding fixing portions (not shown in figures) on the bottom of the third base 64, and a sixth long side 72 of the third solar panel 62 substantially aligns with the first long side 30 of the first solar tile structure 20 , so that the first solar tile structure 20 can be connected to the third solar tile structure 60 in Y direction tightly.

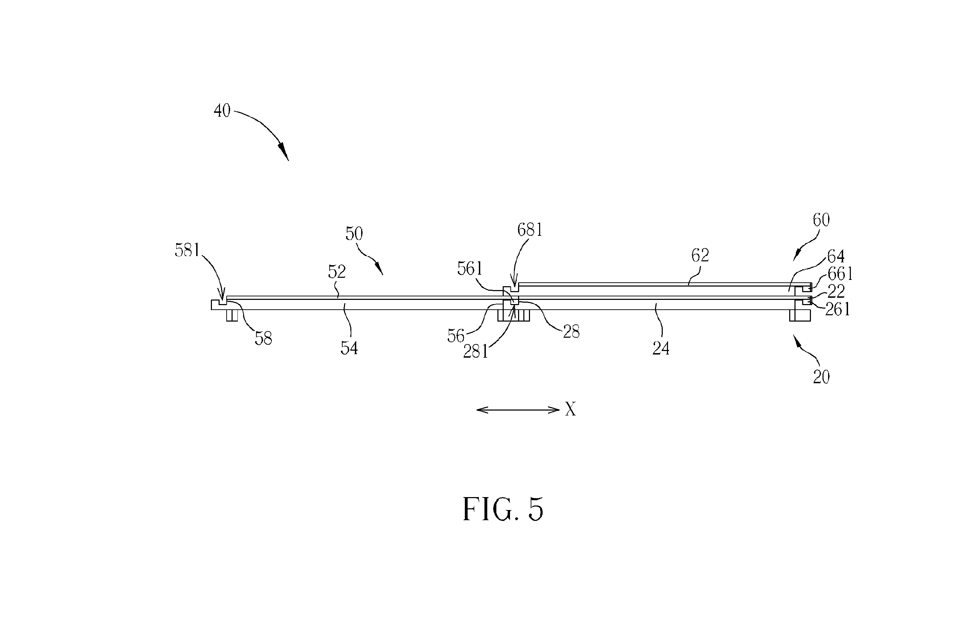

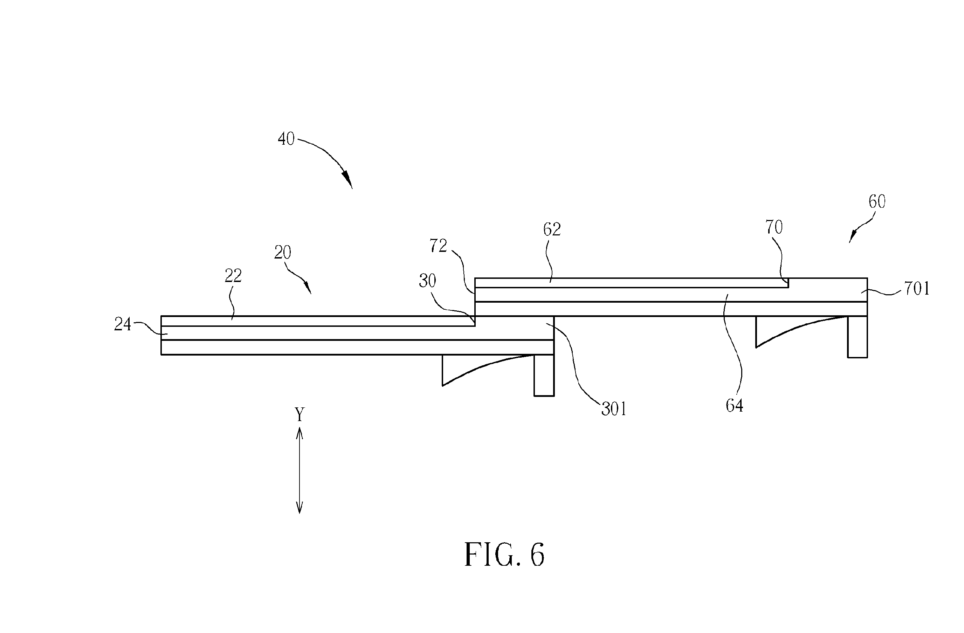

Please refer to FIG.5 and FIG.6. FIG.5 is a front view of the solar tile structure combination 40 according to the preferred embodiment of the present invention. FIG.6 is a lateral view of the solar tile structure combination 40 according to the preferred embodiment of the present invention. As shown in FIG.5, when the first sunken portion 281 of the first solar tile structure 20 is wedged with the corresponding second protruding portion 561 of the second solar tile structure 50, the second solar panel 52 of the second solar tile structure 50 contacts against the first solar panel 22 of the first solar tile structure 20 tightly, so that the solar tile structure combination 40 has a continuous faying plane between the adjacent solar panels in X direction. As shown in FIG.6, when the third base 64 of the third solar tile structure 60 overlaps the rim 301 of the first solar tile structure 20, the sixth long side 72 of the third solar tile structure 60 substantially aligns with the first long side 30 of the first solar tile structure 20, so that the continuous faying plane between the first solar panel 22 of the first solar tile structure 20 and the third solar panel 62 of the third solar tile structure 60 are viewed from an upper of the solar tile structure combination 40. Therefore, when assembling a plurality of solar tile structures for forming the solar tile structure combination 40, the solar tile structure combination 40 has the continuous faying planes between the adjacent solar panels in X direction and in Y direction simultaneously.

When a user intends to utilize the plurality of solar tile structures to form the solar tile structure combination 40, the adjacent solar tile structures can easily be wedged with each other in X direction by the corresponding protruding portion and the corresponding sunken portion, respectively. For example, the first sunken portion 281 of the first solar tile structure 20 can be wedged with the second protruding portion 561 of the second solar tile structure 50. The adjacent solar tile structures can easily be overlapped to each other in Y direction by the base and the corresponding rim. For example, the third base 64 of the third solar tile structure 60 can overlap the rim 301 of the first solar tile structure 20. Thus, the solar tile structure combination 40 has the continuous faying plane between the adjacent solar panels in appearance, and each base of the solar tile structure is hidden under the corresponding solar panel, so that the solar tile structure and the combination thereof of the present invention has preferred aesthetic appearance and high utilization ratio of the solar panels.

Comparing to the prior art, the solar tile structure and the related combination of the present invention utilizes the base to support the solar panel, and further utilizes the protruding portion and the sunken portion respectively formed on the lateral surfaces of the adjacent bases for connecting the adjacent solar tile structures, so that each base of the solar tile structure can be hidden under the corresponding solar panel for presenting the appearance of the continuous faying solar panels. The solar tile structure combination of the present invention with preferred aesthetic appearance not only can be assembled easily, but also has high utilization ratio of the solar panels for increasing operating efficiency of the solar energy.

## Claims

1. A solar tile structure (20) comprising:
a solar panel (22); and
**characterized in that** the solar tile structure (20) further
comprises:
a base (24), an upper surface of the base (24) being for
supporting the solar panel (22), a protruding portion (261) being formed on a lateral surface of a first short side (26) of the base (24), a sunken portion (281) being formed on a lateral surface of a second short side (28) of the base (24), and the protruding portion (261) of the first short side (26) and the sunken portion (281) of the second short side (28) being structural portions capable of wedging with each other tightly;
wherein the second short side (28) of the base (26) and a lateral side of the protruding portion (261) substantially align with two lateral sides of the solar panel (22).

2. The solar tile structure (20) of claim 1, **characterized in that** the protruding portion (261) is a resilient hook, and the sunken portion (281) is a slot corresponding to the resilient hook.

3. The solar tile structure (20) of claims 1 or 2, **characterized in that** the first short side (26) of the base (24) is parallel to the second short side (28) substantially.

4. The solar tile structure (20) of claims 1 , 2, or 3, **characterized in that** a rim (301) is formed on a first long side (30) of the base (24).

5. The solar tile structure (20) of claim (20) of claims 1 , 2, 3, or 4, **characterized in that** the solar tile structure (20) further comprises:
a plurality of buffers (34) disposed on the lateral surfaces of the
first short side (26) and the second short side (28) of the base (24) respectively.

6. The solar tile structure (20) of claims 1, 2, 3, 4, or 5, **characterized in that** the solar tile structure (20) further comprises:
a junction box (36) disposed on a bottom surface of the base
(24); and
a transmission cable, two ends of the transmission cable being
electrically connected to the solar panel (22) and the junction box (36) for transmitting electricity transformed by the solar panel (22) to the junction box (36).

7. The solar tile structure (20) of claim 6, **characterized in that** the solar tile structure (20) further comprises:
a battery module (38) electrically connected to the junction box
(36) for storing the electricity received by the junction box (36).

8. A solar tile structure combination (40), **characterized in that** the solar tile structure combination (40) comprises:
a first solar tile structure (20) comprising:
a first solar panel (22); and
a first base (24), an upper surface of the first base (24)
being for supporting the first solar panel (22), a first protruding portion (261) being formed on a lateral surface of a first short side (26) of the first base (24), a first sunken portion (281) being formed on a lateral surface of a second short side (28) of the first base (24), and the first protruding portion (261) of the first short side (26) and the first sunken portion (281) of the second short side (28) being structural portions capable of wedging with each other tightly, wherein the second short side (28) of the first base (24) and a lateral side of the first protruding portion (261) substantially align with two lateral sides of the first solar panel (22);
a second solar tile structure (50) connected to the first solar tile
structure (20), the second solar tile structure (50) comprising:
a second solar panel (52); and
a second base (54), an upper surface of the second base (54)
being for supporting the second solar panel (52), a second protruding portion (561) being formed on a lateral surface of a third short side (56) of the second base (54), a second sunken portion (581) being formed on a lateral surface of a fourth short side (58) of the second base (54), and the second protruding portion (561) of the third short side (56) and the second sunken portion (581) of the fourth short side (58) being structural portions capable of wedging with each other tightly, wherein the fourth short side (58) of the second base (54) and a lateral side of the second protruding portion (561) substantially align with two lateral sides of the second solar panel (52);
wherein the first protruding portion (261) of the first solar tile
structure (20) is wedged with the corresponding second sunken portion (581) of the second solar tile structure (50) tightly, or the second protruding portion (561) of the second solar tile structure (50) is wedged with the corresponding first sunken portion (281) of the first solar tile structure (20) tightly when the second solar tile structure (50) is connected to the first solar tile structure (20).

9. The solar tile structure combination (40) of claim 8, **characterized in that** the first protruding portion (261) of the first base (24) and the second protruding portion (561) of the second base (54) are resilient hooks respectively, and the first sunken portion (281) of the first base (24) and the second sunken portion (581) of the second base (54) are slots corresponding to the resilient hooks respectively.

10. The solar tile structure combination (40) of claims 8 or 9, **characterized in that** the first short side (26) of the first base (24) is parallel to the second short side (28) substantially, and the third short side (56) of the second base (54) is parallel to the fourth short side (58) substantially.

11. The solar tile structure combination (40) of claims 8, 9, or 10, **characterized in that** a rim (301) is formed on a first long side (30) of the first base (24).

12. The solar tile structure combination (40) of claims 8, 9, 10, or 11, **characterized in that** the solar tile structure combination (40) further comprises:
a third solar tile structure (60) comprising:
a third solar panel (62); and
a third base (64), an upper surface of the third base (64)
being for supporting the third solar panel (62), a third protruding portion (661) being formed on a lateral surface of a fifth short side (66) of the third base (64), a third sunken portion (681) being formed on a lateral surface of a sixth short side (68) of the third base (64), and the third protruding portion (661) of the fifth short side (66) and the third sunken portion (681) of the sixth short side (68) being structural portions capable of wedging with each other tightly;
wherein the sixth short side (68) of the third base (64) and
a lateral side of the third protruding portion (661) substantially align with two lateral sides of the third solar panel (62), and a rim (701) is formed on a fifth long side (70) of the third base (64).

13. The solar tile structure combination (40) of claim 12, **characterized in that** the fifth long side (70) of the third base (64) aligns with the first long side (30) of the first base (24) substantially.

14. The solar tile structure combination (40) of claims 8, 9, 1 0, 1 1 , 1 2, or 13, **characterized in that** the first solar tile structure (20) further comprises:
a junction box (36) disposed on a bottom surface of the first
base (24); and
a transmission cable, two ends of the transmission cable being
electrically connected to the first solar panel (22) and the junction box (36) for transmitting electricity transformed by the first solar panel (22) to the junction box (36).

15. The solar tile structure combination (40) of claim 14, **characterized in that** the first solar tile structure (20) further comprises:
a battery module (38) electrically connected to the junction
box (36) for storing the electricity received by the junction box (36).
